# EUROPÄISCHE PATENTANMELDUNG

(11) **EP 4 682 502 A1**
(43) Veröffentlichungstag der Anmeldung: **21.01.2026**
(21) Anmeldenummer: 25189306.1
(22) Anmeldetag: 14.07.2025
(51) Int. Cl.: G01M 99/00

(54) **VERFAHREN ZUR AUSFALLPROGNOSE VON PRÜFANLAGEN**

(30) Priorität: 15.07.2024 AT 505842024
(71) Anmelder: AVL List GmbH, 8020 Graz (AT)
(72) Erfinder: Ochensberger, Walter, 9463 Reichenfels (AT)

(57) **Zusammenfassung**

Es wird ein Verfahren zur Ausfallprognose von Prüfanlagen, welche mehrere funktionsrelevante Komponenten (12, 14, 16, 18, 20) aufweisen, vorgeschlagen, bei zumindest ein funktionsrelevanter Betriebsparameter (x, T, Δp, t, *ṁ,* ϕ) zumindest einer Komponente (12, 14, 16, 18, 20) der Prüfanlagen (10), welcher mit einer möglichen Schädigung der zumindest einen Komponente (12, 14, 16, 18, 20) der Prüfanlagen (10) korreliert, während des Betriebs der Prüfanlagen (10) gemessen und die ermittelten Messwerte des funktionsrelevanten Betriebsparameters (x, T, Δp, t, *ṁ*, ϕ) in einer Rechen- und Speichereinheit (22), die mit den Prüfanlagen (10) datenübertragend verbunden ist, abgespeichert wird, der funktionsrelevante Betriebsparameter (x, T, Δp, t, *ṁ*, ϕ) der zumindest einen Komponente (12, 14, 16, 18, 20) jeder Prüfanlage (10) mit idealen Betriebsparametern (x, T, Δp, t, *ṁ*, ϕ) der jeweiligen Komponente (12, 14, 16, 18, 20) der Prüfanlagen (10), die in der Rechen- und Speichereinheit (22) hinterlegt sind, verglichen wird und in der Rechen- und Speichereinheit (22) relative Abweichungen zwischen den Messwerten des funktionsrelevanten Betriebsparameters (x, T, Δp, t, *ṁ*, ϕ) und den zugehörigen idealen Betriebsparametern (x, T, Δp, t, *ṁ*, ϕ) berechnet werden, die Betriebszeiten (t) der zumindest einen Komponente (12, 14, 16, 18, 20) der Prüfanlagen (10) gemessen und in der Rechen- und Speichereinheit (22) abgespeichert werden, die relativen Abweichungen als Ordinatenwert eines Wöhlerdiagramms (26) in der Rechen- und Speichereinheit (22) gespeichert werden, die Betriebszeiten als Abszissenwert des Wöhlerdiagramms (26) in der Rechen- und Speichereinheit (22) gespeichert werden, bei Über- oder Unterschreiten eines definierten und in der Rechen- und Speichereinheit (22) hinterlegten Schwellwertes des funktionsrelevanten Betriebsparameters (x, T, Δp, t, *ṁ*, ϕ) auf eine Schädigung der zumindest einen Komponente (12, 14, 16, 18, 20) in einer ersten der Prüfanlagen (10) geschlossen wird und über das Wöhlerdiagramm (26) und einen zuvor festgelegten k-Wert ein voraussichtlicher Ausfall der entsprechenden Komponente (12, 14, 16, 18, 20) der anderen Prüfanlagen (10) in der Rechen- und Speichereinheit (22) berechnet wird, bei Ausfall der zumindest einen Komponente (12, 14, 16, 18, 20) in jeder weiteren Prüfanlage (10) der k-Wert des Wöhlerdiagramms (26) in der Rechen- und Speichereinheit (22) korrigiert wird, nach einer definierten Anzahl von Ausfällen der zumindest einen Komponente (12, 14, 16, 18, 20) in den weiteren Prüfanlagen (10) aus dem Wöhlerdiagramm (26) eine Vorhersage zur Ausfallprognose der Komponente (12, 14, 16, 18, 20) der aller mit der Rechen- und Speichereinheit (22) verbundenen Prüfanlagen (10) über die Rechen- und Speichereinheit (22) ausgegeben wird.

## Beschreibung

Die Erfindung betrifft ein Verfahren zur Ausfallprognose von Prüfanlagen.

Solche Prüfanlagen dienen dazu Aggregate, insbesondere von Fahrzeugen, zu testen oder auch Emissionen dieser Aggregate oder ganzer Fahrzeuge zu messen. Beispielhaft, aber nicht abschließend seien hier Batterieprüfstände, Brennstoffzellenprüfstände, Prüfstände zum Testen des Antriebsstrangs oder der Elektroantriebe und Verbrennungsmotoren des jeweiligen Antriebsstrangs, Bremsenprüfstände sowie Emissionsprüfstände zum Messen vorhandener Partikel oder chemischer Substanzen genannt. Dabei kann ein Prüfstand verschiedene Prüfanlagen aufweisen.

Diese Prüfanlagen weisen eine Mehrzahl an Komponenten auf, welche für den Erhalt korrekter Messergebnisse notwendig sind. Diese funktionsrelevanten Komponenten befinden sich üblicherweise in einem Kraftfluss der Prüfanlage, der durch einen elektrischen Strom- oder Datenfluss oder einen Gas- oder Flüssigkeitsstrom gebildet werden kann.

Die Prüfanlagen unterliegen verschiedenen Betriebsbedingungen und -belastungen, die zu einem Verschleiß oder einer Schädigung und im Extremfall zu einem Ausfall einer funktionsrelevanten Komponente und damit einem Ausfall der Prüfanlage führen können. Aus diesem Grund werden üblicherweise Wartungen an diesen Anlagen in regelmäßigen Zeitabständen durchgeführt, die einen solchen Ausfall der Prüfstandanlage verhindern sollen.

Um unnötige Ausfallzeiten oder Wartungszeiten zu vermeiden, ist es wünschenswert eine möglichst zuverlässige Funktions-, Lebensdauer- und schließlich Ausfallvorhersage für einen zuverlässigen Testdurchlauf vornehmen zu können. Des Weiteren könnten Wartungen vorausschauend durchgeführt werden, wenn vorhergesagt werden könnte, welche Komponente voraussichtlich als Erstes ausfallen wird. Eine Vorhersage zur Funktionsfähigkeit oder Lebensdauer von Prüfanlagen müsste hierfür auf einer höheren Systemebene stattfinden und erfordert ein tieferes Verständnis der Wirkungen bei gegebenen Belastungs- und Umgebungsbedingungen. Daher sind zur Lösung dieses Problems vor allem sehr aufwendige Modellierungen oder die Durchführung einer Vielzahl von Versuchen bekannt geworden. Zusätzlich erweist sich die Übertragung von solchen genormten Versuchen und Simulationen auf reale Systeme als sehr problematisch, da die einzelnen strukturellen Komponenten einer Prüfanlage, nicht vollständig abgedeckt werden.

So wird in der DE 102 15 865 ein Verfahren zur Ermittlung der Ausfallwahrscheinlichkeit einer Komponente eines Kraftfahrzeugs, hier eines Einspritzsystems, offenbart, bei dem während des Betriebs der Komponente Daten in Form von schädigungsrelevanten Einflussparametern, welche die Ausfallwahrscheinlichkeit der Komponente beeinflussen, erfasst und abgespeichert werden, und anschließend genutzt werden, um eine Ausfallwahrscheinlichkeit zu ermitteln. Dies erfolgt durch Berechnung einer Kollektivschadensumme, die ein Maß für die durch die Einflussparameter verursachte akkumulierte Belastung der Komponente ist, wobei eine zuvor ermittelte ertragbare Schadensumme der Komponente durch Versuche ermittelt wird. Hierzu wird die Kollektivschadensumme anhand einer linearen Schadensakkumulationshypothese nach Palmgren- Miner in Abhängigkeit eines Belastungskollektivs, das ein Maß für eine anhand der Einflussparameter ermittelte akkumulierte Belastung der Komponente ist, und einer im Vorfeld der Auswertung der Einflussparameter ermittelten Bauteilwöhlerkurve, die ein Maß der Belastbarkeit der Komponente ist, berechnet. Die Kollektivschadensumme und die ertragbare Schadensumme werden bezüglich des Einspritzsystems jeweils für eine Speicherleiste, einen Injektorkörper, ein Gehäuse einer Hochdruckpumpe und/oder einen Zylinderkopf der Hochdruckpumpe ermittelt, wozu als Einflussparameter der Einspritzdruck verwendet wird. Die hierbei vorzunehmenden Berechnungen und Vorversuche verursachen einen hohen Rechen- und Zeitaufwand.

Es besteht somit das Problem, dass zur Durchführung solcher Verfahren, die Versuche und Simulationen immer auf der Bauteilebene durchgeführt werden und somit für die Gesamtanlage eine Vielzahl an Messwerten aufgenommen werden müssen, Vorversuche durchgeführt werden müssen und anschließende Berechnungen durchgeführt werden müssen, die einen hohen Rechenaufwand erfordern.

Es stellt sich daher die Aufgabe, ein Verfahren zur Ausfallprognose von Prüfanlagen zu schaffen, mit dem mit einer minimalen Anzahl an Versuchen oder Messwerten und minimalem Rechenaufwand eine Vorhersage durchgeführt werden kann.

Diese Aufgabe wird durch ein Verfahren zur Ausfallprognose von Prüfanlagen mit den Merkmalen des Hauptanspruchs 1 gelöst.

Beim erfindungsgemäßen Verfahren zur Ausfallprognose von Prüfanlagen, welche mehrere funktionsrelevante Komponenten aufweisen, wird zumindest ein funktionsrelevanter Betriebsparameter zumindest einer Komponente der Prüfanlagen, welcher mit einer möglichen Schädigung der zumindest einen Komponente der Prüfanlagen korreliert, während des Betriebs der Prüfanlagen gemessen und die ermittelten Messwerte in einer Rechen- und Speichereinheit, die mit den Prüfanlagen datenübertragend verbunden ist, abgespeichert. Zur Messung dieses Betriebsparameters werden beispielsweise Sensoren verwendet. Unter einem funktionsrelevanten Betriebsparameter wird ein Parameter verstanden, der für die korrekte Funktion der Prüfanlage vorhanden und in einem korrekten Bereich liegen muss. So kann beispielsweise bei Prüfanlagen, in denen eine Förderung eines Mediums durch die Anlage vorliegt, diese ohne eine erzeugte Druckdifferenz nicht korrekt funktionieren. Des Weiteren soll ein Abweichen der Messwerte dieses Betriebsparameters von üblichen Werten auf eine mögliche Schädigung der entsprechenden Komponente hindeuten, wovon im genannten Beispiel ebenfalls auszugehen ist, da ein entsprechender Druckdifferenzabfall oder eine entsprechende Steigerung üblicherweise auf einen irgendwie gearteten Verschleiß oder Schaden im Bereich der die Druckdifferenz erzeugenden Komponente zurückzuführen ist. Die Rechen- und Speichereinheit ist üblicherweise eine Einheit, die insbesondere kontaktlos über WLAN oder ähnliche drahtlose Verbindungen mit den Prüfanlagen verbunden ist, und in der Berechnungen durchgeführt sowie Daten hinterlegt und gespeichert werden können. Die Messwerte des funktionsrelevanten Betriebsparameters der zumindest einen Komponente jeder Prüfanlage werden im Folgenden mit idealen Betriebsparametern der jeweiligen Komponente der Prüfanlagen, die in der Rechen- und Speichereinheit hinterlegt sind, verglichen und relative Abweichungen zwischen den gemessenen funktionsrelevanten Betriebsparametern und den zugehörigen idealen Betriebsparametern in der Rechen- und Speichereinheit berechnet. Diese idealen Betriebsparameter sind aus den vorhandenen Herstellerdaten der jeweiligen Komponente bekannt und werden entsprechend in die Rechen- und Speichereinheit übertragen. Häufig beruhen auf diesen idealen Betriebsparametern auch die Auslegungen der entsprechenden Komponenten. Zusätzlich werden die Betriebszeiten der zumindest einen Komponente der Prüfanlagen gemessen und in der Rechen- und Speichereinheit abgespeichert.

Die zuvor berechneten relativen Abweichungen zwischen dem gemessenen funktionsrelevanten Parameter und dessen idealem Wert oder Sollwert werden als Ordinatenwert eines Wöhlerdiagramms in der Rechen- und Speichereinheit gespeichert, während die Betriebszeiten als Abszissenwert des Wöhlerdiagramms in der Rechen- und Speichereinheit gespeichert werden.

Sobald ein Über- oder Unterschreiten eines definierten und in der Rechen- und Speichereinheit hinterlegten Schwellwertes des funktionsrelevanten Betriebsparameters festgestellt wird, der auf eine Schädigung der zumindest einen Komponente in einer ersten der Prüfanlagen schließen lässt, wird über das Wöhlerdiagramm und einen zuvor festgelegten k-Wert ein voraussichtlicher Ausfall der entsprechenden Komponente der anderen Prüfanlagen in der Rechen- und Speichereinheit berechnet. Dieser k-Wert kann beispielsweise als Ausgangswert den Wert 3 aufweisen. Je nachdem, wie sicher bereits nach dem Ausfall der Komponente in der ersten Prüfanlage eine rechtzeitige Voraussage zu Ausfällen der weiteren Prüfanlagen stattfinden soll, kann dieser Wert auch größer oder kleiner gewählt werden. Der Schwellwert wird in Abhängigkeit der Soll-Werte der Komponente entsprechend der Herstellerdaten zuvor festgelegt und in der Speichereinheit abgelegt. Bei Ausfall der zumindest einen Komponente in jeder weiteren Prüfanlagen wird der k-Wert des Wöhlerdiagramms in der Rechen- und Speichereinheit korrigiert, wobei auf einen Ausfall erneut durch Überschreiten des für die entsprechenden Prüfanlage definierten Schwellwertes geschlossen wird. Nach einer definierten Anzahl von Ausfällen der zumindest einen Komponente in den weiteren Prüfanlagen wird aus dem Wöhlerdiagramm eine Vorhersage zur Ausfallprognose der Komponente aller mit der Rechen- und Speichereinheit verbundenen Prüfanlagen über die Rechen- und Speichereinheit ausgegeben. Mit diesem Verfahren wird somit das Wöhlerdiagramm für eine höhere Systemebene genutzt, als dies bislang der Fall war. Dies erfolgt durch eine bislang nicht gekannte Abstraktion des Wöhlerdiagramms von der mechanischen Beanspruchung und damit Festigkeit einer Komponente zu einem die Funktionsfähigkeit der Prüfanlage bewertenden Betriebsparameter. Durch diese Abstraktion durch den Ersatz der Spannungsamplituden durch einen relativen Schädigungsparameter wird es möglich, ohne vorherige FEM-Berechnungen, Modelle oder Prüfstandsversuche Aussagen zu möglichen kommenden Ausfällen zu prognostizieren. Der hierzu notwendige Rechen- und Speicheraufwand ist im Vergleich zu bekannten Ausführungen sehr gering. Mit einer wachsenden Anzahl an Ausfällen und verbundener Prüfanlagen können so immer genauere Vorhersagen getroffen werden. Es erfolgt eine Nutzung von Felddaten zur automatischen, iterativen Optimierung des k-Werts mit automatisierter Ablage in einer Datenbank zur Nutzung für andere, ähnliche Systeme.

Ein Wöhlerdiagramm im Sinne des erfindungsgemäßen Verfahrens bedeutet keine grafische Darstellung sondern eine Berechnung des Wöhlerdiagramms.

Vorzugsweise werden die als Ordinatenwert gespeicherten relativen Abweichungen als prozentuale Abweichung des gemessenen relevanten Betriebsparameters vom hinterlegten idealen Betriebsparameter im Wöhlerdiagramm berechnet. Die Verwendung einer solchen prozentualen Abweichung birgt den Vorteil, dass Prüfanlagen verschiedener Größen und gegebenenfalls unterschiedlichen strukturellen Aufbaus miteinander verglichen werden können, um eine entsprechende Ausfallprognose zu tätigen. Das Verfahren kann auf diese Weise für größere Systeme wie Maschinen und Anlagen, deren Zweck unterschiedlich ist, aber welche ähnliche funktionale Komponenten aufweisen, angewendet werden.

Des Weiteren kann vorteilhaft als relevanter Betriebsparameter das 75%-Quantil der Messwerte des relevanten Betriebsparameters zur prozentualen Berechnung der Abweichung vom idealen Betriebsparameter verwendet werden. Auf diese Weise wird automatisch eine Datenbereinigung und Quantifizierung durchgeführt, da einzelne Spitzenwerte keinen größeren Einfluss haben.

In einer bevorzugten Ausführung werden zu jeder funktionsrelevanten Komponente der Prüfanlage die funktionsrelevanten Betriebsparameter überwacht und ein entsprechendes Wöhlerdiagramm zur Ausfallprognose für jede Komponente berechnet. Auf diese Weise kann eine Vorhersage zu jeder Komponente durchgeführt werden und so Wartungen zielgenau über die gesamte Lebensdauer der Prüfanlage durchgeführt werden.

In einer bevorzugten Ausgestaltung der Erfindung werden in einem ersten Schritt funktionsrelevante Komponenten der Prüfanlagen identifiziert und funktionsrelevante Betriebsparameter, welche mit einer möglichen Schädigung der funktionsrelevanten Komponenten korrelieren, identifiziert. Um diese kritischen Komponenten zu identifizieren, haben sich im Bereich Systems oder Reliability Engineering sogenannte Reliability Block-Diagramme als nützlich erwiesen, bei denen das Funktionsprofil des zu untersuchenden Systems in einem Funktionsschaubild, als Flussdiagramm oder Schaltbild, dargestellt werden. Jeder Block beschreibt die Hauptfunktion einer Komponente oder bezeichnet die Komponente selbst. Die Verbindung der Blöcke mit Pfeilen und deren Serien- oder Parallelschaltung beschreibt den Prozess zur Erfüllung der Hauptfunktion des zu untersuchenden Gesamtsystems. Dieser Vorgang kann entsprechend entweder von einem Fachmann durchgeführt werden oder automatisiert auf der Recheneinheit erfolgen, indem dort Schaubilder der Prüfanlage hinterlegt werden.

In einem folgenden Schritt wird vorzugsweise eine Matrix erstellt, in der zu jeder funktionsrelevanten Komponente ein Wert für einen zu erwartenden kritischen Einflussfaktor des funktionsrelevanten Betriebsparameters zugeordnet wird, um eine einzelne zu überwachende funktionsrelevante Komponente der Prüfanlage zu identifizieren, der ein höchstes Ausfallrisiko zuzuordnen ist. Durch die Identifizierung einer einzelnen kritischen Komponente wird der Speicher- und Rechenaufwand erheblich minimiert, ohne die Prognose des ersten Ausfalls der Gesamtanlage zu verschlechtern. Diese Fehler- Einfluss Matrix ergibt sich aus den Systemkomponenten in den Spalten der Matrix, die die Funktion der Prüfanlage ermöglichen, und den Messgrößen in den Zeilen. Der Zweck der Matrix ist es zu veranschaulichen, wie eine Komponente geschädigt werden kann und wie diese Schädigung mit den vorhandenen Messgrößen abgeschätzt werden kann. Die Matrix wird daraufhin mit einem Wert für den zu erwartenden kritischen Einflussfaktor befüllt. Dies kann in Form von Werten, beispielsweise zwischen 1 und 10 erfolgen. Eine entsprechende Auswertung beziehungsweise Berechnung kann vom Fachmann oder erneut durch Auswertung und Berechnung in der Rechen- und Speichereinheit erfolgen.

Anschließend wird vorzugsweise bei der Durchführung des Verfahrens derjenige Betriebsparameter derjenigen einzelnen zu überwachenden Komponente gemessen, um einen Ausfall der Prüfanlage zu prognostizieren, bei dem die Werte des zu erwartenden kritischen Einflussfaktors in der Matrix maximal sind, da hier mit der größten Wahrscheinlichkeit ein erster Ausfall erfolgen wird.

Um diese Identifizierung der zu überwachenden Komponente über die Matrix noch zuverlässiger zu gestalten, werden in der Matrix ein oder mehrere Einflussfaktoren für die jeweilige Komponente bestimmt, welche in Abhängigkeit der Wirkung von der Höhe, einzelner Spitzenwerte, Differenzen und/ oder Integralen bestimmt werden, wobei diese Integrale ein Maß dafür bilden, was passiert, wenn die Messwerte für längere Zeit auf einem ungünstigen Niveau liegen würden. Die einzelnen Zusammenhänge dieser Matrix können mathematisch für physikalische Schadensmechanismen hergeleitet und in der Speichereinheit abgespeichert werden

Vorzugsweise wird die Matrix durch gesammelte Daten in der Rechen- und Speichereinheit in Abhängigkeit von Herstellerdaten der Komponenten erstellt. Hierzu müssen für jede Komponente deren Auslegungs- oder Belastungsdaten gesammelt und hinterlegt werden. Eine entsprechende Auswertung kann zur weiteren Verbesserung auch über neuronale Netze durchgeführt werden und somit automatisiert erfolgen.

Besonders bevorzugt ist es, wenn als zu überwachende Komponente der Prüfanlage diejenige Komponente gewählt wird, von der eine Rückwirkung auf die Funktionalität der weiteren in der Prüfanlage verbauten Komponenten am Größten ist. So befindet sich in jeder Prüfanlage eine Komponente, die für die Funktion aller weiteren Komponenten unbedingt notwendig ist. So können beispielsweise Komponenten von Prüfanlagen, in denen ein Medium strömt, ohne ein entsprechendes Fördermittel selbst ebenfalls nicht mehr störungsfrei arbeiten. Gleiches gilt für Prüfstandanlagen mit einem entsprechenden Strom- oder Datenfluss, auf die jeweils nicht verzichtet werden kann. Diese Komponenten sind entsprechend erforderlich für die Funktion der gesamten Prüfanlage und werden bevorzugt als zu überwachende Komponente identifiziert.

Als funktionsrelevanter gemessener Betriebsparameter der gewählten zu beobachtenden Komponente wird vorzugsweise der für die Auslegung der Komponente verwendete Betriebsparameter gewählt. Dies ist beispielweise für Fördereinrichtungen ein zu erfüllender Differenzdruck, für Strom- oder Datenflüsse ein elektrischer Strom.

In einer hierzu alternativen Ausführung des Verfahrens wird aus vorhandenen Datenbanken in der Rechen- und Speichereinheit eine Ursache für die Schädigung der zu überwachenden Komponente identifiziert und als funktionsrelevanter gemessener Betriebsparameter ein durch die identifizierte Ursache beeinflusster Betriebsparameter gewählt. Ein solches Vorgehen ist insbesondere bei einer Vielzahl vorhandener Daten und Prüfanlagen zu bevorzugen. Auch können derartige Daten aus vorhandenen Wartungs- und Instandsetzungsprotokollen gewonnen werden, welche in der Rechen- und Speichereinheit gesammelt werden.

Es wird somit ein Verfahren zur Ausfallprognose von Prüfanlagen geschaffen, mit dem bei geringem Rechenaufwand und ohne vorhergehende Versuche eine automatisierte Ausfallprognose ermöglicht wird, welche bereits bei wenigen vorhandenen Daten und vernetzten Prüfanlagen funktioniert und mit steigender Anzahl an mit der Rechen- und Speichereinheit verbundenen Prüfanlagen und steigender Anzahl gesammelter Daten eine stetige Verbesserung der Vorhersagen bewirkt, ohne schädigungsmechanische Details zum Versagen kennen zu müssen. Zusätzlich eignet sich dieses Verfahren auch zur Verbesserung der Ausfallprognose bei sich im Aufbau und der Funktionalität unterscheidender Anlagen, die mit dem Netzwerk verbunden sind.

Im Folgenden wird das erfindungsgemäße Verfahren anhand eines Partikelmessgerätes als Ausführungsbeispiel einer Prüfanlage beschrieben.

Die Figur 1 zeigt ein Systemschaubild eines Partikelmessgerätes als Prüfanlage.

Die Figur 2 zeigt eine Matrix zum Partikelmessgerät zur Identifizierung zu überwachender Komponenten.

Die Figur 3 zeigt beispielhaft eine relative Abweichung der gemessenen funktionsrelevanten Betriebsparameter von den idealen Betriebsparametern verschiedener Partikelmessgeräte.

Die Figur 4 zeigt die Auswertung der relativen Abweichungen zu Ermittlung einer Ausfallprognose mittels eines Wöhlerdiagramms.

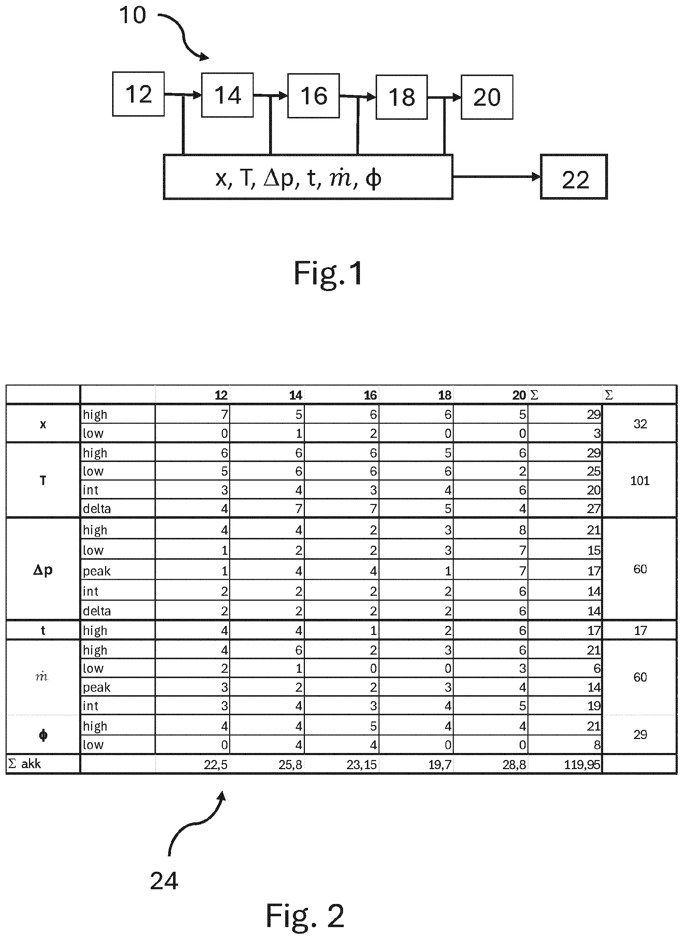

In der Figur 1 ist ein Funktionsschaubild eines als Prüfanlage 10 dienenden Partikelmessgerätes dargestellt. Dieses besteht aus einem Verdünner 12, einem Sättiger 14, einem Kondensor 16, einer Laser-Optik 18 sowie einer Pumpe 20, welche als funktionsrelevante Komponenten 12, 14, 16, 18, 20 der Prüfanlage 10 dienen. Die Komponenten 12, 14, 16, 18, 20 können dabei auch noch in weitere Einzelkomponenten aufgeteilt werden, falls dies gewünscht ist. Beispielhaft sei genannt, dass die Pumpe 20 noch in ihre Einzelkomponenten, wie Filter, Ventile, Membrane oder Antrieb aufgeteilt werden kann, worauf im vorliegenden Ausführungsbeispiel zum einfacheren Verständnis verzichtet wird. Des Weiteren werden in dieser Prüfanlage 10 verschiedene Messungen über Sensoren 21 vorgenommen. Hierzu zählen im vorliegenden Ausführungsbeispiel die Partikelanzahl x, die Strömungstemperatur T, der Strömungsdruck beziehungsweise Differenzdruck Δp, die Betriebsdauer t, der Massenstrom *ṁ* und die Feuchtigkeit ϕ, welche als funktionsrelevante Komponenten Partikelanzahl x, die Strömungstemperatur T, der Strömungsdruck beziehungsweise Betriebsparameter x, T, Δp, t, *ṁ*, ϕ dienen können. Dieser Aufbau der jeweiligen Prüfanlage 10 kann den entsprechenden Betriebsanleitungen oder Benutzerleitfäden entnommen werden und in einer Rechen- und Speichereinheit 22 abgelegt werden. Die Identifizierung der möglichen Messungen sowie der Komponenten 12, 14, 16,18, 20 bildet einen ersten Schritt des Verfahrens, wenn diese Bewertungen der Prüfanlage 10 nicht bereits zuvor vorgenommen und aus der Rechen- und Speichereinheit 22 auslesbar sind.

Das Gleiche gilt auch für den zweiten Schritt, in dem eine Komponenten-Betriebsparameter-Matrix 24 erstellt wird, wie diese beispielhaft in der Figur 2 dargestellt ist. In dieser Matrix 24 bilden die funktionsrelevanten Komponenten 12, 14, 16, 18, 20 die Spalten und die funktionsrelevanten Betriebsparameter x, T, Δp, t, *ṁ*, ϕ die Zeilen der Matrix 24. Nunmehr wird jedem Paar aus Betriebsparameterx, T, Δp, t, *ṁ*, ϕ und Komponente ein Wert zwischen 1 und 10 für einen zu erwartenden kritischen Einflussfaktor des funktionsrelevanten Betriebsparameters x, T, Δp, t, *ṁ*, ϕ auf die jeweilige Komponente zugeordnet, wobei der Wert 10 bedeutet, dass durch den jeweiligen Betriebsparameter x, T, Δp, t, *ṁ*, ϕ ein sehr starker kritischer Einfluss auf die jeweilige Komponente besteht. Dabei werden je nach Art beziehungsweise Größe des Betriebsparameters x, T, Δp, t, *ṁ*, ϕ dessen Einfluss auf die Komponente bewertet. Die Bewertung erfolgt im Vergleich zu einer normalen Belastung entsprechend der Auslegung. Dabei können kritische Einflussfaktoren für hohe Werte, niedrige Werte, Änderungen der Werte, einzelne Spitzenwerte und Integrale, die zeigen, ob ein Messwert über längere Zeiten auf einem ungünstigen Niveau liegen, berücksichtigt werden. Diese Einflussfaktoren können auf vorangehenden Messungen oder gespeicherten älteren Messungen für die jeweilige Komponente an anderen Anlagen, welche in der Rechen- und Speichereinheit 22 hinterlegt sind, beruhen oder mathematisch für physikalische Schadensmechanismen in der Rechen- und Speichereinheit 22 hergeleitet werden oder aufgrund des Fachwissens eines Fachmanns abgeschätzt werden. Anschließend werden die Einflussfaktoren für jede Zeile und Spalte summiert, wobei bei Messgrößen mit mehreren berücksichtigten Einflussfaktoren die arithmetischen Mittel addiert werden. In der vorliegenden Matrix 24 wird deutlich, dass der Einfluss der Betriebsparameterx, T, Δp, t, *ṁ*, ϕ auf die Pumpe 20 am höchsten ist. Somit kann die Pumpe 20 als kritisches Bauteil mit dem höchsten Ausfallrisiko und somit als zu überwachende funktionsrelevante Komponente identifiziert werden.

Des Weiteren kann aus der Matrix 24 auch abgelesen werden, welcher funktionsrelevante Betriebsparameter x, T, Δp, t, *ṁ*, ϕ den höchsten Einfluss auf die Lebensdauer ausübt. Für die Pumpe 20 ist dies der Differenzdruck Δp und damit auch die Auslegungsgröße einer Pumpe 20. Durch den hohen Wert zeigt sich auch, dass der Differenzdruck Δp aus schädigungsmechanischer Sicht sehr viele Fehlermöglichkeiten mit einer Messgröße abdeckt. So deutet ein hoher Differenzdruck auf eine höhere notwendige Pumpenleistung und somit Beanspruchung hin, welche beispielsweise aufgrund einer hohen Partikelanzahl in einer verschmutzten Strömung entstehen kann. Ein Peak, also kurzzeitiger Druckausschlag oder ein sprunghafter Anstieg, lässt auf ein Leck im System schließen. Die Berechnung eines Delta lässt eine Materialermüdung innerhalb der Pumpe 20 bewerten.

Auch wird beispielsweise deutlich, dass für den Sättiger 14 und den Kondensor 16 die Temperatur den kritischen BetriebsparameterT bildet, der beobachtet werden sollte, wenn zu mehreren Komponenten 12, 14, 16, 18, 20 Ausfallprognosen gestellt werden sollen.

Alternativ kann die funktionsrelevante Komponente 20 auch über ihre zu erwartende Rückwirkung auf die Funktionalität der weiteren in der Prüfanlage 20 verbauten Komponenten bestimmt werden und der funktionsrelevante gemessene Betriebsparameter x, T, Δp, t, *ṁ*, ϕ entsprechend des für die Auslegung dieser Komponente verwendeten Wertes gewählt werden. Auch kann der funktionsrelevante Betriebsparameter x, T, Δp, t, *ṁ*, ϕ aus vorhandenen in der Rechen- und Speichereinheit 22 gespeicherten Daten bezüglich einer Ursache für eine Schädigung der zu überwachenden Komponente 12, 14, 16, 18, 20 gewonnen werden, indem zunächst die Ursache identifiziert wird und im Folgenden der Wert bestimmt wird, der durch diese Ursache maßgeblich beeinflusst wird.

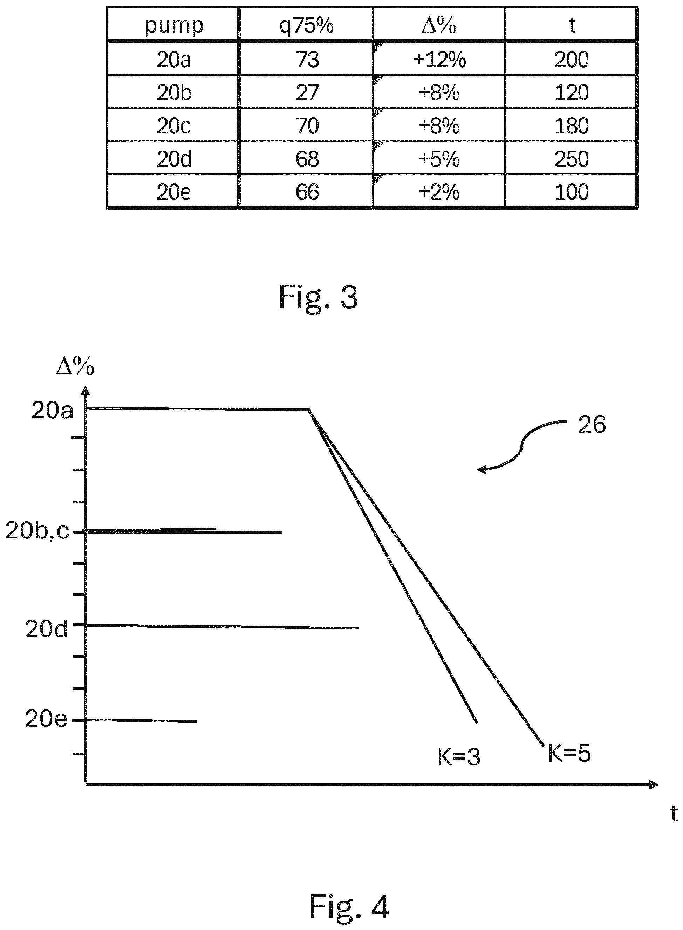

Nach der erfolgten Identifizierung des funktionsrelevanten Betriebsparameters Δp und der funktionsrelevanten Komponente, hier der Pumpe 20, kann die Datenbereinigung und Quantifizierung der Lastbereiche vorgenommen werden. Hierfür eignen sich insbesondere statistische Verfahren, wie zum Beispiel die Berechnung von 75%-Quantilen über die Laufzeit, wie dies für fünf verschiedene Pumpen 20a, 20b, 20c, 20d, 20e aus unterschiedlichen Prüfanlagen 10 in Figur 3 gezeigt wird. Die Betriebsbereiche werden dabei auf ideale Betriebsbedingungen entsprechend des Lastenheftes und der Auslegung des Herstellers bezogen, um die verschiedenen Pumpen 20a, 20b, 20c, 20d, 20e vergleichbar zu machen. Die Figur 3 zeigt die Tabelle mit Beispielwerten, wobei in Spalte 1 die verschiedenen Pumpen mit 20a, 20b, 20c, 20d und 20e bezeichnet sind, in Spalte 2 der Betriebsbereich dieser Pumpen 20a, 20b, 20c, 20d, 20e als 75 % Quantil in mbar aufgeführt ist und in Spalte 3 eine prozentuale Abweichung des 75%-Quantils vom idealen Betrieb berechnet wurde.

Im letzten erfindungsgemäßen Schritt werden nun die funktionsrelevanten Komponenten 12, 14, 16, 18, 20, hier die Pumpen 20a, 20b, 20c, 20d, 20e, sowie deren Messungen in Zusammenhang gebracht. Dies erfolgt über ein Wöhlerdiagramm 26, wie es in Figur 4 für die Belastungen der fünf Pumpen 20a, 20b, 20c, 20d, 20e aus der Figur 3 dargestellt ist, wobei auf der Abszisse die Betriebszeiten t der Pumpen 20a, 20b, 20c, 20d, 20e logarithmisch aufgetragen werden und auf der Ordinate die berechnete prozentuale Abweichung Δ% wiederum logarithmisch aufgetragen ist. Nach dem ersten Ausfall einer der Prüfanlagen 10, wie dies für die Pumpe 20a dargestellt ist, ergibt sich ein erster Punkt für einen Schadensfall, der nach 200 Zeiteinheiten detektiert wurde. Dies kann durch eine Überschreitung eines definierten Schwellwertes des Differenzdrucks Δp erfasst werden, der in der Rechen- und Speichereinheit 22 hinterlegt wird oder durch vordefinierte Fehlermeldungen an der Prüfanlage 10. Als Ausfall kann ein tatsächlicher Schaden oder eine signifikante Abweichung in einer gemessenen Charakteristik herangezogen werden. So gibt eine exponentielle Abweichung des gemessenen Differenzdrucks Δp einen Hinweis auf einen instabilen Schädigungsfortschritt und baldigen Ausfall einer Pumpe 20. Zur Vorhersage weiterer Ausfälle kann nun eine Schätzung eines k-Wertes der Kurve des Wöhlerdiagramms 26 dienen, die als Ausgangspunkt dient, bis ein zweiter Ausfall erfasst wird. Übliche Ausgangswerte liegen zwischen 3 und 7. Im vorliegenden Ausführungsbeispiel ist beispielsweise zu erkennen, dass bei einer Wahl des k-Wertes von 5 mit einem Ausfall der Pumpe 20e nach etwa 400 Betriebszeiteinheiten t zu rechnen ist. Unter dieser Annahme eines k-Wertes von 5 würde somit der negative Belastungsunterschied von 10% zwischen der Pumpe 20a und der Pumpe 20e eine doppelte Lebensdauer bedeuten. Durch mindestens 2 detektierte Schadensfälle kann unter den gegebenen Bedingungen die verbleibende Betriebszeit t bis zum nächsten Schadensfall anderer Prüfanlagen 10, beziehungsweise der Pumpen 20 der Prüfanlagen 10 berechnet werden, da hierdurch an die beiden bekannten Ausfallpunkte im Wöhlerdiagramm 26 die k-Linie gezogen werden kann und somit der k-Wert zur Vorhersage zu erwartender weiterer Ausfälle an den anderen Pumpen 20b, 20c, 20d bestimmt werden kann. Mit steigender Nutzungsdauer und Anzahl an Daten kann im Folgenden der k-Wert iterativ über die mit den Prüfanlagen 10 verbundenen Rechen- und Speichereinheit 22 immer weiter verbessert werden, indem der k-Wert immer weiter korrigiert wird, wodurch die Zuverlässigkeit der Ausfallprognosen stetig erhöht wird.

So kann ohne aufwendige Versuche im Vorfeld durch eine zentrale, die Messwerte verschiedener Prüfanlagen sammelnde Rechen- und Speichereinheit Vorhersagen zu möglichen Ausfällen der Prüfanlagen getätigt werden, welche im Lauf der Zeit immer zuverlässiger werden. Hierdurch können rechtzeitig Wartungsintervalle angepasst werden und so im Folgenden Ausfallzeiten vermeiden werden.

Es sollte deutlich sein, dass neben der Priorisierung der funktionsrelevanten Komponente eine solche Ausfallprognose auch für alle oder mehrere relevante Komponenten einer Prüfanlage durchgeführt werden kann, indem für alle funktionsrelevanten Komponenten der funktionsrelevante und mit einem möglichen Schaden korrelierende Betriebsparameter identifiziert und gemessen wird und dessen Messwerte zur Ausfallprognose der spezifischen Komponente genutzt wird. Hierdurch können weitere genauere Wartungsintervalle für einzelne Komponenten der Prüfanlage eingeführt werden.

## Patentansprüche

1. Verfahren zur Ausfallprognose von Prüfanlagen, welche mehrere funktionsrelevante Komponenten (12, 14, 16, 18, 20) aufweisen, bei dem
zumindest ein funktionsrelevanter Betriebsparameter (x, T, Δp, t, *ṁ*, ϕ) zumindest einer Komponente (12, 14, 16, 18, 20) der Prüfanlagen (10), welcher mit einer möglichen Schädigung der zumindest einen Komponente (12, 14, 16, 18, 20) der Prüfanlagen (10) korreliert, während des Betriebs der Prüfanlagen (10) gemessen und die ermittelten Messwerte des funktionsrelevanten Betriebsparameters (x, T, Δp, t, *ṁ*, ϕ) in einer Rechen- und Speichereinheit (22), die mit den Prüfanlagen (10) datenübertragend verbunden ist, abgespeichert wird, der funktionsrelevante Betriebsparameter (x, T, Δp, t, *ṁ*, ϕ) der zumindest einen Komponente (12, 14, 16, 18, 20) jeder Prüfanlage (10) mit idealen Betriebsparametern (x, T, Δp, t, *ṁ*, ϕ) der jeweiligen Komponente (12, 14, 16, 18, 20) der Prüfanlagen (10), die in der Rechen- und Speichereinheit (22) hinterlegt sind, verglichen wird und in der Rechen- und Speichereinheit (22) relative Abweichungen zwischen den Messwerten des funktionsrelevanten Betriebsparameters (x, T, Δp, t, *ṁ*, ϕ) und den zugehörigen idealen Betriebsparametern (x, T, Δp, t, *ṁ*, ϕ) berechnet werden,
die Betriebszeiten (t) der zumindest einen Komponente (12, 14, 16, 18, 20) der Prüfanlagen (10) gemessen und in der Rechen- und Speichereinheit (22) abgespeichert werden,
die relativen Abweichungen als Ordinatenwert eines Wöhlerdiagramms (26) in der Rechen- und Speichereinheit (22) gespeichert werden,
die Betriebszeiten als Abszissenwert des Wöhlerdiagramms (26) in der Rechen- und Speichereinheit (22) gespeichert werden,
bei Über- oder Unterschreiten eines definierten und in der Rechen- und Speichereinheit (22) hinterlegten Schwellwertes des funktionsrelevanten Betriebsparameters (x, T, Δp, t, *ṁ*, ϕ) auf eine Schädigung der zumindest einen Komponente (12, 14, 16, 18, 20) in einer ersten der Prüfanlagen (10) geschlossen wird und über das Wöhlerdiagramm (26) und einen zuvor festgelegten k-Wert ein voraussichtlicher Ausfall der entsprechenden Komponente (12, 14, 16, 18, 20) der anderen Prüfanlagen (10) in der Rechen- und Speichereinheit (22) berechnet wird,
bei Ausfall der zumindest einen Komponente (12, 14, 16, 18, 20) in jeder weiteren Prüfanlage (10) der k-Wert des Wöhlerdiagramms (26) in der Rechen- und Speichereinheit (22) korrigiert wird, nach einer definierten Anzahl von Ausfällen der zumindest einen Komponente (12, 14, 16, 18, 20) in den weiteren Prüfanlagen (10) aus dem Wöhlerdiagramm (26) eine Vorhersage zur Ausfallprognose der Komponente (12, 14, 16, 18, 20) der aller mit der Rechen- und Speichereinheit (22) verbundenen Prüfanlagen (10) über die Rechen- und Speichereinheit (22) ausgegeben wird.

2. Verfahren zur Ausfallprognose von Prüfanlagen nach Anspruch 1,
**dadurch gekennzeichnet, dass**
die als Ordinatenwert gespeicherten relativen Abweichungen als prozentuale Abweichung des gemessenen relevanten Betriebsparameters (x, T, Δp, t, *ṁ*, ϕ) vom hinterlegten idealen Betriebsparameter (x, T, Δp, t, *ṁ*, ϕ) im Wöhlerdiagramm (26) berechnet werden.

3. Verfahren zur Ausfallprognose von Prüfanlagen nach Anspruch 2,
**dadurch gekennzeichnet, dass**
als relevanter Betriebsparameter (x, T, Δp, t, *ṁ*, ϕ) das 75%-Quantil der Messwerte des relevanten Betriebsparameters (x, T, Δp, t, *ṁ*, ϕ) zur prozentualen Berechnung der Abweichung vom idealen Betriebsparameter (x, T, Δp, t, *ṁ*, ϕ) verwendet wird.

4. Verfahren zur Ausfallprognose von Prüfanlagen nach einem der vorhergehenden Ansprüche,
**dadurch gekennzeichnet, dass**
zu jeder funktionsrelevanten Komponente (12, 14, 16, 18, 20) der Prüfanlage (10) die funktionsrelevanten Betriebsparameter (x, T, Δp, t, *ṁ*, ϕ) überwacht werden und ein entsprechendes Wöhlerdiagramm (26) zur Ausfallprognose für jede Komponente (12, 14, 16, 18, 20) berechnet wird.

5. Verfahren zur Ausfallprognose von Prüfanlagen nach einem der Ansprüche 1 bis 3,
**dadurch gekennzeichnet, dass**
in einem ersten Schritt funktionsrelevante Komponenten (12, 14, 16, 18, 20) der Prüfanlagen (10) identifiziert werden und funktionsrelevante Betriebsparameter (x, T, Δp, t, *ṁ*, ϕ), welche mit einer möglichen Schädigung der funktionsrelevanten Komponenten (12, 14, 16, 18, 20) korrelieren, identifiziert werden.

6. Verfahren zur Ausfallprognose von Prüfanlagen nach Anspruch 5,
**dadurch gekennzeichnet, dass**
in einem folgenden Schritt eine Matrix (24) erstellt wird, in der zu jeder funktionsrelevanten Komponente (12, 14, 16, 18, 20) ein Wert für einen zu erwartenden kritischen Einflussfaktor des funktionsrelevanten Betriebsparameters (x, T, Δp, t, *ṁ*, ϕ) zugeordnet wird, um eine einzelne zu überwachende funktionsrelevante Komponente (12, 14, 16, 18, 20) der Prüfanlage (10) zu identifizieren, der ein höchstes Ausfallrisiko zuzuordnen ist.

7. Verfahren zur Ausfallprognose von Prüfanlagen nach Anspruch 6,
**dadurch gekennzeichnet, dass**
anschließend derjenige Betriebsparameter (x, T, Δp, t, m, ϕ) derjenigen einzelnen zu überwachenden Komponente (12, 14, 16, 18, 20) gemessen wird, um einen Ausfall der Prüfanlage (10) zu prognostizieren, bei dem die Werte des zu erwartenden kritischen Einflussfaktors in der Matrix (24) maximal sind.

8. Verfahren zur Ausfallprognose von Prüfanlagen nach Anspruch 7,
**dadurch gekennzeichnet, dass**
in der Matrix (24) ein oder mehrere Einflussfaktoren für die jeweilige Komponente (12, 14, 16, 18, 20) bestimmt werden, welche in Abhängigkeit der Wirkung von der Höhe, einzelner Spitzenwerte, Differenzen und/ oder Integralen bestimmt werden.

9. Verfahren zur Ausfallprognose von Prüfanlagen nach Anspruch 8,
**dadurch gekennzeichnet, dass**
die Matrix (24) durch gesammelte Daten in der Rechen- und Speichereinheit (22) in Abhängigkeit von Herstellerdaten der Komponenten (12, 14, 16, 18, 20) erstellt wird.

10. Verfahren zur Ausfallprognose von Prüfanlagen nach einem der Ansprüche 1 bis 3,
**dadurch gekennzeichnet, dass**
als zu überwachende Komponente (12, 14, 16, 18, 20) der Prüfanlage (10) diejenige Komponente (20) gewählt wird, von der eine Rückwirkung auf die Funktionalität der weiteren in der Prüfanlage (20) verbauten Komponenten (12, 14, 16, 18, 20) am Größten ist.

11. Verfahren zur Ausfallprognose von Prüfanlagen nach Anspruch 10,
**dadurch gekennzeichnet, dass**
als funktionsrelevanter gemessener Betriebsparameter (x, T, Δp, t, *ṁ*, ϕ) der gewählten zu beobachtenden Komponente (20) der für die Auslegung der Komponente (20) verwendete Betriebsparameter (Δp) gewählt wird.

12. Verfahren zur Ausfallprognose von Prüfanlagen nach Anspruch 10,
**dadurch gekennzeichnet, dass**
aus vorhandenen Datenbanken in der Rechen- und Speichereinheit (22) eine Ursache für die Schädigung der zu überwachenden Komponente (12, 14, 16, 18, 20) identifiziert wird und als funktionsrelevanter gemessener Betriebsparameter (x, T, Δp, t, m, ϕ) ein durch die identifizierte Ursache beeinflusster Betriebsparameter (x, T, Δp, t, *ṁ*, ϕ) gewählt wird.
